# EUROPÄISCHE PATENTANMELDUNG

(11) **EP 4 098 111 A1**
(43) Veröffentlichungstag der Anmeldung: **07.12.2022**
(21) Anmeldenummer: 22176167.9
(22) Anmeldetag: 30.05.2022
(51) Int. Cl.: A01K 15/02

(54) **HUNDESPIELZEUG**

(30) Priorität: 31.05.2021 CH 6252021
(71) Anmelder: Burri, Michaela, 4704 Niederbipp (CH); Burri, Niklaus, 4704 Niederbipp (CH)
(72) Erfinder: Burri, Michaela, 4704 Niederbipp (CH); Burri, Niklaus, 4704 Niederbipp (CH)
(74) Vertreter: Keller Schneider Patent- und Markenanwälte AG

(57) **Zusammenfassung**

Ein Hundespielzeug (10) zum Training und/oder zur spielerischen Erziehung umfasst eine öffenbare Hülle (11), insbesondere eine aufkaubare und/oder aufreissbare Hülle (11), wobei in der öffenbaren Hülle (11) ein Objekt (12), insbesondere ein Spielzeug, Nahrung und/oder Nahrungsergänzungsmittel, angeordnet ist, wobei das Objekt (12), insbesondere ausschliesslich durch Öffnen der öffenbaren Hülle (11) dem Hundespielzeug (10) entnommen werden kann.

## Beschreibung

### Technisches Gebiet

Die Erfindung betrifft ein Hundespielzeug zum Training und/oder zur spielerischen Erziehung umfassend eine öffenbare Hülle, insbesondere eine aufkaubare und/oder aufreissbare Hülle sowie ein Verfahren zur Herstellung des Hundespielzeugs.

### Stand der Technik

Hundespielzeug sind Objekte, mit welchen ein Hund zum Spielen animiert oder dressiert werden kann. Das Hundespielzeug kann unterschiedliche Funktionen ausüben. Typische Hundespielzeuge sind als Apportierspielzeuge bekannt (Ball, Seilstück etc.). Weitere Hundespielzeuge dienen zur spielerischen Ausgabe von Futter.

Das US-Patent US 9,596,832 B2 offenbart zum Beispiel ein Spielzeug für Hunde, bei welchem Futter in Aufnahmen des Spielzeugs aufgenommen sein kann. Das chinesische Gebrauchsmuster CN 205213797 U offenbart ein Spielzeug für Hunde aus Rindsleder, welches mit einem Seil aus Rindsleder zu einer konischen Form genäht ist. Das Seil kann vom Hund abgebissen werden.

Es existiert ein Bedarf an Hundespielzeugen, welche einerseits einfach in der Handhabung sind und anderseits den Spieltrieb des Hundes besonders gut anregen.

### Darstellung der Erfindung

Aufgabe der Erfindung ist es, eine dem eingangs genannten technischen Gebiet zugehörendes Hundespielzeug zu schaffen, welches bei einfacher Handhabung den Spieltrieb des Hundes besonders gut anregt.

Die Lösung der Aufgabe ist durch die Merkmale des Anspruchs 1 definiert. Gemäss der Erfindung ist in der öffenbaren Hülle ein Objekt, insbesondere ein Spielzeug, Nahrung und/oder Nahrungsergänzungsmittel, angeordnet, wobei das Objekt, insbesondere ausschliesslich durch Öffnen der öffenbaren Hülle dem Hundespielzeug entnommen werden kann.

Mit dem erfindungsgemässen Hundespielzeug kann der Spieltrieb des Hundes besonders effizient angeregt werden, da der Hund mit dem Geruchssinn, dem Geschmackssinn und/oder dem Tastsinn (Schnauze, Pfoten) erkennen kann, dass innerhalb der öffenbaren Hülle etwas versteckt ist. Der Hund kann zum Beispiel in einem ersten Schritt mit dem Geruchssinn erkennen, dass sich ein für ihn interessantes Objekt in der öffenbaren Hülle befindet. Anschliessend kann der Hund - abhängig von der Art der Hülle und des Objekts - bereits durch Ertasten seine Vermutung bestätigen. Damit wird das Interesse und die Neugier des Hundes geweckt. Dadurch wird nun der Spieltrieb des Hundes aktiviert, da dieser nun versuchen wird, an das Objekt zu gelangen, indem er die öffenbare Hülle zu öffnen versucht. Je nach Art der Verpackung kann der Hund nun durch Kauen, Reissen, Werfen etc. des Hundespielzeugs die öffenbare Hülle öffnen, um an das Objekt zu gelangen. Abhängig vom Hund und von der Stabilität der Hülle kann dieser Prozess länger oder weniger lange dauern. Gegebenenfalls kann die öffenbare Hülle an die Hunderasse, das Alter des Hundes etc. derart angepasst sein, dass das Öffnen für den jeweiligen Hund möglich, aber nicht zu einfach ist. Insbesondere bevorzugt soll der Hund nach dem Öffnen der öffenbaren Hülle durch das Objekt von der öffenbaren Hülle abgelenkt sein, d.h. die öffenbare Hülle weckt vorzugsweise ohne das darin befindliche Objekt das Interesse des Hundes nur beschränkt.

Unter dem Begriff Hundespielzeug wird vorliegend ein Spielzeug verstanden, welches insbesondere aus Sicht der Veterinärmedizin für Hunde bedenkenlos ist. Das heisst, dass die Materialien des Hundespielzeugs keine Stoffe enthalten, welche für einen Hund eine gesundheitliche Gefährdung darstellen können. Damit werden insbesondere zum Beispiel öffenbare Hüllen ausgeschlossen, welche gleichzeitig für den Hund gesundheitsschädigend sein können und aufgrund der Beschaffenheit von einem Hund verschlungen werden können. Dieses Kriterium kann von der Hunderasse, dem Alter des Hundes etc. abhängig sein. Besonders bevorzugt ist die öffenbare Hülle derart beschaffen, dass sie von einem Hund nicht verschlungen wird respektive nicht verschlungen werden kann. Dem Fachmann sind dazu beliebig viele Möglichkeiten bekannt (Formgebung, Grösse, Materialwahl etc.).

Die öffenbare Hülle weist vorzugsweise eine Materialstärke auf, welche grösser als 0.5 mm, vorzugsweise grösser als 1 mm ist. In einer besonders bevorzugten Ausführungsform liegt die Materialstärke der öffenbaren Hülle in einem Bereich zwischen 1 mm und 10 mm, vorzugsweise zwischen 1 mm und 5 mm. In Varianten kann die Materialstärke auch kleiner als 0.5 mm oder grösser als 10 mm sein.

Vorzugsweise umfasst die öffenbare Hülle Textilien, Leder, insbesondere Kauleder, Plüsch und/oder Plastik, insbesondere bevorzugt Textilien aus Baumwolle. In einer besonders bevorzugten Variante ist die öffenbare Hülle flexibel. Die Verwendung von Baumwolle hat den Vorteil, dass Baumwollstoffe einfach in der Herstellung und in der Verarbeitung sind. Damit kann das Hundespielzeug besonders kostengünstig hergestellt werden. Zudem ist Baumwolle als natürlicher Rohstoff für den Hund absolut unbedenklich. Gegebenenfalls kann die öffenbare Hülle zusätzlich elastisch ausgebildet sein. Damit wird das Hundespielzeug für den Hund attraktiver zum Kauen. Weiter kann der Hund damit das in der öffenbaren Hülle enthaltene Objekt bereits vor dem Öffnen der öffenbaren Hülle ertasten. In Varianten kann die öffenbare Hülle aber auch starr ausgebildet sein und zum Beispiel zwei Halbschalen umfassen, welche über eine Rastverbindung verbunden werden können, wobei im Innern der beiden verbundenen Halbschalen ein Objekt aufgenommen ist.

Vorzugsweise umfasst die öffenbare Hülle eine Sollbruchstelle, insbesondere eine aufreissbare Naht oder eine Perforation, durch welche die öffenbare Hülle öffenbar ist. Durch Kauen, Beissen oder Reissen kann damit der Hund die öffenbare Hülle über die Sollbruchstelle öffnen. Damit wird ein kontrolliertes Öffnen der öffenbaren Hülle ermöglicht. Für die Konstruktion des Hundespielzeugs hat dies den Vorteil, dass das Objekt derart platziert werden kann, dass das Risiko der Beschädigung des Objekts durch das Öffnen der öffenbaren Hülle reduziert ist.

In Varianten kann auf die Sollbruchstelle auch verzichtet werden. In diesem Fall kann die öffenbare Hülle auch derart beschaffen sein, dass diese an beliebiger Stelle aufgerissen werden kann - auch in dieser Ausführungsform kann die öffenbare Hülle mit einer Naht versehen sein, welche in diesem Fall jedoch stabiler als das Hüllmaterial ausgebildet ist. Weiter kann die öffenbare Hülle auch als ein reversibel verschliessbarer Behälter ausgebildet sein.

Die öffenbare Hülle und das Objekt sind vorzugsweise derart beschaffen, dass sich der Hund nach dem Öffnen der öffenbaren Hülle mit dem darin entdeckten Objekt beschäftigt, d.h. die öffenbare Hülle ist vorzugsweise lediglich ein Mittel, um das Objekt dem Hund nicht zu einfach verfügbar zu machen. Insofern kann die öffenbare Hülle als WegwerfArtikel vorgesehen sein. In Varianten kann die öffenbare Hülle aber auch derart ausgebildet sein, dass diese wieder verwendet werden kann (indem zum Beispiel erneut ein Objekt in der öffenbaren Hülle positioniert und die öffenbare Hülle wieder verschlossen wird).

Vorzugsweise weist die öffenbare Hülle eine runde oder ovale Aussenform auf. Mit der runden respektive ovalen Aussenform wird ein Hundespielzeug geschaffen, an welchem sich der Hund möglichst nicht verletzen kann. Weiter wird damit für das Objekt ein grösstmögliches Volumen bei geringsten Abmessungen der öffenbaren Hülle erreicht. In Varianten können auch andere Aussenformen vorgesehen sein, insbesondere Polygone, Sternformen, Freiformen (z.B. Knochenform etc.). Dem Fachmann sind beliebig viele Varianten für die Aussenform bekannt.

Vorzugsweise umfasst das Objekt ein Spielzeug, insbesondere einen Ball, ein quietschendes Gummiobjekt und/oder ein Kauspielzeug. In weiteren bevorzugten Varianten umfasst das Objekt Nahrung, insbesondere trockenes Fleisch, Kauknochen, Trockenfutter und/oder getrocknete Tierhaut. In weiteren bevorzugten Varianten umfasst das Objekt Nahrungsergänzungsmittel, insbesondere ein Vitaminpräparat und/oder ein Öl.

Das Objekt kann auch mehrere der vorgenannten Inhalte gleichzeitig umfassen. Insbesondere kann zum Beispiel ein Nahrungsmittel mit einem Nahrungsergänzungsmittel präpariert sein. In weiteren Varianten kann das Objekt auch mit einem Medikament versehen sein, welches dem Hund so auf spielerische Weise verabreicht werden kann. Dem Fachmann sind weitere Objekte bekannt, welche in der öffenbaren Hülle angeordnet werden können, um den Spieltrieb des Hundes zu aktivieren respektive zu fördern.

Vorzugsweise ist in der öffenbaren Hülle weiter ein Füllmaterial, insbesondere Füllwatte angeordnet, wobei das Objekt insbesondere in der Füllwatte eingebettet ist. Mit dem Füllmaterial kann das Objekt während des Öffnens der öffenbaren Hülle durch den Hund geschützt werden. Weiter kann mit dem Füllmaterial das Hundespielzeug schöner geformt werden, da damit das Objekt durch die (flexible) öffenbare Hülle nicht direkt erkannt werden kann. Als Füllmaterial können auch andere Materialien als Watte verwendet werden, wie zum Beispiel ein Schaumstoff oder dergleichen. In Varianten kann auf das Füllmaterial auch verzichtet werden.

Bevorzugt weist das Hundespielzeug einen grössten Durchmesser auf, welcher zwischen 5 cm und 30 cm, vorzugsweise zwischen 5 cm und 20 cm liegt. Besonders bevorzugt ist der grösste Durchmesser des Hundespielzeugs auf die Grösse des Hundes abgestimmt. So kann für kleine Hunde eine kleine Ausführungsform vorliegen mit einem grössten Durchmesser von zwischen 5 cm und 10 cm, insbesondere ungefähr 7 cm und einem Gewicht zwischen 10 g und 40 g, insbesondere ungefähr 25 g. Für mittelgrosse Hunde kann eine mittelgrosse Ausführungsform vorgesehen sein, mit einem grössten Durchmesser von zwischen 8 cm und 14 cm, insbesondere ungefähr 11 cm und einem Gewicht zwischen 15 g und 50 g, insbesondere ungefähr 30 g. Für grössere Hunde kann schliesslich eine grössere Ausführungsform vorgesehen sein, mit einem grössten Durchmesser von zwischen 10 cm und 25 cm, insbesondere ungefähr 17 cm und einem Gewicht zwischen 20 g und 60 g, insbesondere ungefähr 35 g. Dem Fachmann ist klar, dass es sich hierbei nur um Beispiele von Abmessungen und Gewichtsangaben handelt. Das Hundespielzeug kann auch einen grösseren Durchmesser als 25 cm aufweisen. Auch das Gewicht kann weit höher sein al 35 g. Insbesondere für sehr grosse Hunde kann zum Beispiel ein Gewicht des Hundespielzeugs auch 100 g, 250 g oder mehr betragen.

Das Hundespielzeug umfasst vorzugsweise mindestens eine erste Kammer und eine zweite Kammer, wobei bevorzugt in der ersten Kammer das Objekt und in der zweiten Kammer Füllwatte angeordnet ist. Damit kann dem Hundespielzeug auch bei kleineren Objekten ein hinreichend grosses Volumen gegeben werden. Damit wird die Bespielbarkeit für den Hund, insbesondere das Zerreissen, erleichtert. Dem Fachmann ist klar, dass auch mehr als zwei Kammern vorgesehen sein können. So kann zum Beispiel das Objekt in einer mittleren Kammer angeordnet sein, so dass es durch die beiden äusseren, mit Füllwatte gefüllten Kammern während des Öffnens durch den Hund geschützt ist. Weiter kann auch in der ersten Kammer ein erstes Objekt, z.B. ein Ball, und in der zweiten Kammer ein zweites Objekt, z.B. Futter, angeordnet sein. Damit kann verhindert werden, dass z.B. das Futter den Geschmack des Balls annimmt oder ein anderes Spielzeug durch das Futter verunreinigt wird. Zwei Kammern können zum Beispiel dadurch gebildet werden, dass drei Lappen übereinander gelegt werden und zusammen über den Rand vernäht werden. Weiter können mehrere einzelne Kammern (prinzipiell einzelne Hundespielzeuge mit genau einer Kammer) in einer grösseren Kammer respektive öffenbaren Hülle aufgenommen sein. Weiter können zwischen zwei Lappen Trennwände vorgesehen sein, welche zum Beispiel aus demselben Material wie die Lappen ausgebildet sind. Schliesslich können die Kammern auch durch Trennnähte erreicht werden. Dem Fachmann sind weitere Variationen bekannt. In Varianten kann insbesondere auch genau eine Kammer vorgesehen sein. In einem Verfahren zur Herstellung eines Hundespielzeugs wird in einem Hüllmaterial ein Objekt, insbesondere ein Spielzeug, Nahrung und/oder Nahrungsergänzungsmittel, positioniert und anschliessend das Hüllmaterial zu einer öffenbaren Hülle derart verschlossen, dass das Objekt innerhalb der öffenbaren Hülle angeordnet ist und insbesondere ausschliesslich durch Öffnen der öffenbaren Hülle dem Hundespielzeug entnommen werden kann.

Dazu kann ein Hüllmaterial aus Leder, Kauleder, Textilien, Plüsch oder Kunststoff wie Plastik oder Gummi vorgesehen sein. Das Objekt kann in das Hüllmaterial eingenäht sein. Für die Naht kann eine geeignete Schnur oder auch ein Lederriemen oder dergleichen verwendet werden. Statt einer genähten Naht kann das Hüllmaterial auch verklebt oder, insbesondere bei der Wahl geeigneter Kunststoffe, eine Schweissnaht aufweisen. Dem Fachmann sind weitere Varianten bekannt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig.1: eine schematische Darstellung einer Draufsicht auf eine erste Ausführungsform eines Hundespielzeugs;
- Fig.2: eine schematische Darstellung einer Draufsicht auf eine zweite Ausführungsform eines Hundespielzeugs;
- Fig.3: eine schematische Explosionsdarstellung einer dritten Ausführungsform eines Hundespielzeugs;
- Fig.4: eine schematische Schnittdarstellung durch eine vierte Ausführungsform eines Hundespielzeugs; und
- Fig.5: eine schematische Schnittdarstellung durch eine fünfte Ausführungsform eines Hundespielzeugs.

Grundsätzlich sind in den Figuren gleiche Teile mit gleichen Bezugszeichen versehen.

### Wege zur Ausführung der Erfindung

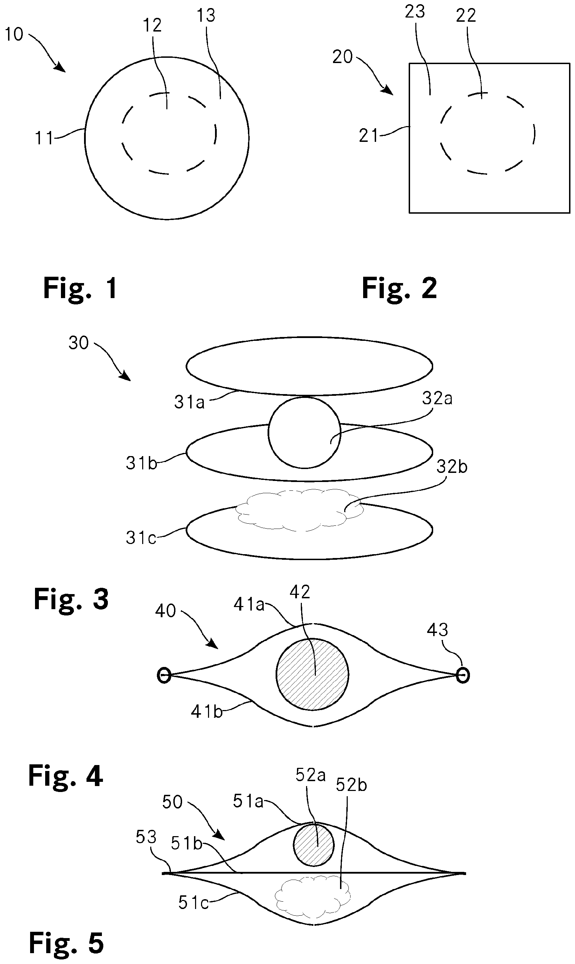

Die Figur 1 zeigt eine schematische Darstellung einer Draufsicht auf eine erste Ausführungsform 10 eines Hundespielzeugs. Das Hundespielzeug 10 weist im Querschnitt eine runde Form auf. Das Hundespielzeug 10 umfasst eine öffenbare Hülle, welche vorliegend als Plüsch-Hülle 11 ausgebildet ist. Im Innern der Plüsch-Hülle 11 befindet sich vorliegend getrocknetes Fleisch 12, welches in Watte 13 eingebettet ist. Die Plüsch-Hülle 11 ist derart ausgelegt, dass ein Hund das Plüschmaterial zerreissen kann, um an das Trockenfleisch zu gelangen.

Die Figur 2 zeigt eine schematische Darstellung einer Draufsicht auf eine zweite Ausführungsform eines Hundespielzeugs 20. Das Hundespielzeug 20 weist im Querschnitt eine quadratische Form auf. Das Hundespielzeug 20 umfasst eine öffenbare Hülle, welche vorliegend als Kauleder-Hülle 21 ausgebildet ist. Im Innern der Kauleder-Hülle 21 befindet sich vorliegend ein Spielball 22, welcher in einem Schaumstoff 23 eingebettet ist. Die Kauleder-Hülle 21 ist vorliegend mit einer Naht vernäht, welche als Sollbruchstelle vorliegt, so dass der Hund die Naht aufreissen kann.

Die Figur 3 zeigt eine schematische Explosionsdarstellung einer dritten Ausführungsform eines Hundespielzeugs 30. Dieses umfasst vorliegend eine öffenbare Hülle aus drei textilen Lappen 31a bis 31c, wobei eine Quietschente 32a (schematisch dargestellt) als Spielzeug zwischen dem ersten Lappen 31a und dem zweiten Lappen 31b angeordnet ist. Zwischen dem zweiten Lappen 31b und dem dritten Lappen 31c ist Füllwatte 32b angeordnet. In der Herstellung des Hundespielzeugs 30 werden schliesslich die drei textilen Lappen 31a bis 31c über deren Ränder miteinander vernäht. Die textilen Lappen 31a bis 31c weisen vorliegend eine geringere Zugfestigkeit auf als die Naht, so dass das vorliegende Hundespielzeug 30 keine Sollbruchstelle aufweist. Die textilen Lappen 31a bis 31c sind vorliegend aus Bauwollstoff ausgebildet.

Die Figur 4 zeigt eine schematische Schnittdarstellung durch eine vierte Ausführungsform eines Hundespielzeugs 40. Das Hundespielzeug umfasst einen Kunststofflappen 41a und 41b, wobei ein Leckerli 42 für einen Hund zwischen den beiden Kunststofflappen 41a und 41b eingeschlossen ist. Die beiden Kunststofflappen 41a und 41b sind am Rand mit Klemmmittel 43 aus Kunststoff zusammen gehalten. Auch hier weisen die Kunststofflappen 41a und 41b eine geringere Reissfestigkeit auf als die Klemmmittel 43, so dass keine Sollbruchstelle vorgesehen ist.

Die Figur 5 zeigt eine schematische Schnittdarstellung durch eine fünfte Ausführungsform eines Hundespielzeugs 50. Das Hundespielzeug umfasst drei Kunststofflappen 51a bis 51c, wobei ein Spielball 52a zwischen den beiden Kunststofflappen 51a und 51b sowie Füllwatte 52b zwischen den Kunststofflappen 51b und 51c eingeschlossen ist. Die drei Kunststofflappen 51a bis 51c sind am Rand mit einem Klebstoff 53 verschweisst. Auch in dieser Ausführungsform des Hundespielzeugs 50 ist keine Sollbruchstelle vorgesehen ist.

Dem Fachmann ist klar, dass weitere Ausführungsformen des Hundespielzeugs im Sinne der Erfindung mit den vorliegenden Merkmalen kombiniert werden können.

Zusammenfassend ist festzustellen, dass erfindungsgemäss ein Hundespielzeug bereitgestellt wird, welches besonders einfach in der Herstellung ist und den Spieltrieb des Hundes optimal anregen kann.

## Patentansprüche

1. Hundespielzeug (10) zum Training und/oder zur spielerischen Erziehung umfassend eine öffenbare Hülle (11), insbesondere eine aufkaubare und/oder aufreissbare Hülle, **dadurch gekennzeichnet, dass** in der öffenbaren Hülle (11) ein Objekt (12), insbesondere ein Spielzeug, Nahrung und/oder Nahrungsergänzungsmittel, angeordnet ist, wobei das Objekt (12), insbesondere ausschliesslich durch Öffnen der öffenbaren Hülle (11) dem Hundespielzeug (10) entnommen werden kann.

2. Hundespielzeug (10) nach Anspruch 1, **dadurch gekennzeichnet, dass** die öffenbare Hülle (11) Textilien, Leder, insbesondere Kauleder, Plüsch und/oder Plastik, insbesondere bevorzugt Textilien aus Baumwolle umfasst.

3. Hundespielzeug (10) nach Anspruch 1 oder 2, **dadurch gekennzeichnet, dass** die öffenbare Hülle (11) eine Sollbruchstelle, insbesondere eine aufreissbare Naht oder eine Perforation umfasst, durch welche die öffenbare Hülle (11) öffenbar ist.

4. Hundespielzeug (10) nach einem der Ansprüche 1 bis 3, **dadurch gekennzeichnet, dass** die öffenbare Hülle (11) eine runde oder ovale Aussenform aufweist.

5. Hundespielzeug (10) nach einem der Ansprüche 1 bis 4, **dadurch gekennzeichnet, dass** das Objekt (12) ein Spielzeug, insbesondere einen Ball, ein quietschendes Gummiobjekt und/oder ein Kauspielzeug umfasst.

6. Hundespielzeug (10) nach einem der Ansprüche 1 bis 5, **dadurch gekennzeichnet, dass** das Objekt (12) Nahrung, insbesondere trockenes Fleisch, Kauknochen, Trockenfutter und/oder getrocknete Tierhaut umfasst.

7. Hundespielzeug (10) nach einem der Ansprüche 1 bis 6, **dadurch gekennzeichnet, dass** das Objekt (12) Nahrungsergänzungsmittel, insbesondere ein Vitaminpräparat und/oder ein Öl umfasst.

8. Hundespielzeug (10) nach einem der Ansprüche 1 bis 7, **dadurch gekennzeichnet, dass** in der öffenbaren Hülle (11) weiter ein Füllmaterial (13), insbesondere Füllwatte angeordnet ist, wobei das Objekt (12) insbesondere in der Füllwatte eingebettet ist.

9. Hundespielzeug (10) nach einem der Ansprüche 1 bis 8, **dadurch gekennzeichnet, dass** das Hundespielzeug (10) einen grössten Durchmesser aufweist, welcher zwischen 5 cm und 30 cm, vorzugsweise zwischen 5 cm und 20 cm liegt.

10. Hundespielzeug (30) nach einem der Ansprüche 1 bis 9, **dadurch gekennzeichnet, dass** das Hundespielzeug (30) mindestens eine erste Kammer und eine zweite Kammer umfasst, wobei vorzugsweise in einer ersten Kammer das Objekt (32a) und in der zweiten Kammer Füllwatte (32b) angeordnet ist.

11. Verfahren zur Herstellung eines Hundespielzeugs (10) nach einem der Ansprüche 1 bis 9, **dadurch gekennzeichnet, dass** in einem Hüllmaterial ein Objekt (12), insbesondere ein Spielzeug, Nahrung und/oder Nahrungsergänzungsmittel, positioniert wird und das Hüllmaterial zu einer öffenbaren Hülle (11) derart verschlossen wird, dass das Objekt (12) innerhalb der öffenbarten Hülle (11) angeordnet ist und insbesondere ausschliesslich durch Öffnen der öffenbaren Hülle (11) dem Hundespielzeug (10) entnommen werden kann.
